# EUROPÄISCHE PATENTSCHRIFT

(11) **EP 2 762 842 B1**
(45) Veröffentlichungstag und Bekanntmachung des Hinweises auf die Patenterteilung: **14.02.2024**
(21) Anmeldenummer: 14000845.9
(22) Anmeldetag: 10.01.2014
(51) Int. Cl.: G01F 1/66, G01F 15/18, G10K 11/00

(54) **ULTRASCHALLWANDLER FÜR EIN ULTRASCHALLDURCHFLUSSMESSGERÄT**
ULTRASONIC TRANSDUCER FOR AN ULTRASONIC FLOW RATE METER
TRANSDUCTEUR D'ULTRASONS POUR UN DEBITMETRE A ULTRASONS

(30) Priorität: 28.01.2013 DE 102013001351
(43) Veröffentlichungstag der Anmeldung: 06.08.2014
(73) Patentinhaber: Krohne AG, 4019 Basel (CH)
(72) Erfinder: Martin van Klooster, Jeroen, NL - 4003 DJ Tiel (NL); Huijzer, Arie, NL - 3363 BS Sliedrecht (NL)
(74) Vertreter: Gesthuysen Patentanwälte

(56) Entgegenhaltungen:
- EP-A2- 2 148 322
- WO-A1-00/72000
- DE-A1- 19 812 458
- DE-A1-102010 064 117
- US-A- 5 159 838
- US-A1- 2012 125 122

## Beschreibung

Die Erfindung betrifft einen Ultraschallwandler als ein wesentlicher Teil eines Ultraschalldurchflussmessgeräts, mit einem Wandlergehäuse und einem Wandlerelement, wobei das Wandlergehäuse ein Ultraschallfenster und ein Gehäuserohr aufweist, das Wandlerelement zum Senden oder Empfangen von Ultraschallwellen ausgebildet und entweder nahe dem Ultraschallfenster des Wandlergehäuses oder fern vom Ultraschallfenster des Wandlergehäuses vorgesehen ist, wobei ein relativ weiches mechanisches Koppelsystem vorgesehen ist, das wenigstens einen schwach gekoppelten mechanischen Resonator oder wenigstens zwei schwach gekoppelte Resonatoren aufweist, und wobei ein zweites weiches mechanisches Koppelsystem vorgesehen ist. Dabei kann das Wandlergehäuse in einem ersten Bereich das Ultraschallfenster aufweisen. Üblicherweise sind die Ultraschallwellen als Gehäusewellen zwischen dem ersten Bereich des Wandlergehäuses über einen vermittelnden weiten Bereich des Wandlergehäuses in einen dem ersten Bereich des ersten Wandlergehäuses gegenüberliegenden dritten Bereich des Wandlergehäuses übertragbar. Das relativ weiche mechanische Koppelsystem kann im zweiten Bereich des Wandlergehäuses vorgesehen sein..

In der Industrie kommt der Mess-, Steuer-, Regel- und Automatisierungstechnik besondere Bedeutung zu. Das gilt insbesondere für die Messtechnik, die Grundlage der Steuer-, Regel- und Automatisierungstechnik ist. Ein bedeutender Bereich der Messtechnik ist die Durchflussmesstechnik (vgl. die umfassende Darstellung von Prof. Dr. sc. nat. Otto Fiedler "Strömungs- und Durchflußmeßtechnik, R. Oldenbourg Verlag München 101992). Für die Durchflussmesstechnik sind von besonderer Bedeutung (siehe "Strömungs- und Durchflußmeßtechnik", aaO) die Durchflussmessung nach mechanischen Wirkprinzipien, insbesondere Schwebekörperdurchflussmessgeräte und Coriolisdurchflussmessgeräte, thermische Durchflussmessgeräte, magnetisch-induktive Durchflussmessgeräte sowie Ultraschalldurchflussmessgeräte.

Bei Ultraschalldurchflussmessgeräten wird der Effekt ausgenutzt, dass in einem in einem Messrohr transportierten Medium der Ausbreitungsgeschwindigkeit des Schallsignals die Transportgeschwindigkeit des Mediums überlagert ist. Die gemessene Ausbreitungsgeschwindigkeit des Schallsignals gegenüber dem Messrohr ist also größer als im ruhenden Medium, wenn das Medium in Richtung des Schallsignals transportiert wird, und die Geschwindigkeit des Schallsignals gegenüber dem Messrohr ist geringer als im ruhenden Medium, wenn das Medium entgegengesetzt der Richtung des Schallsignals transportiert wird. Die Laufzeit des Schallsignals zwischen dem Schallsender und dem Schallempfänger - Schallsender und Schallempfänger sind Ultraschallwandler - hängt aufgrund des Mitführeffekts von der Transportgeschwindigkeit des Mediums gegenüber dem Messrohr und damit gegenüber dem Ultraschallwandler, also gegenüber dem Schallsender und dem Schallempfänger ab.

Problematisch bei Ultraschalldurchflussmessgeräten ist, dass die im Ultraschallwandler erzeugten Ultraschallwellen bzw. die vom Ultraschallwandler empfangenen Ultraschallwellen nicht nur von der Sende- und/oder der Emfangsseite des Wandlergehäuses in das umgebende Medium des Ultraschallwandlers übertragen werden, dass die - gesendeten oder empfangenen - Ultraschallwellen auch über das Wandlergehäuse, gegebenenfalls auch über eine Gehäusehalterung, übertragen werden. Das ist nicht nur deshalb problematisch, weil so unter Umständen ein erheblicher Teil der Sendeleistung bzw. der Empfangsleistung "verloren" geht, sondern es ist vielmehr vor allem deshalb problematisch, weil die durch sogenanntes Übersprechen auf das Wandlergehäuse übertragenen Ultraschallwellen auch zu einer erheblichen empfangsseitigen Störung führen können. Das ist darin begründet, dass empfangsseitig beispielsweise nicht unterschieden werden kann, ob die empfangenen Ultraschallwellen über das Medium empfangen worden sind - Nutzsignal - oder über das Wandlergehäuse.

Insbesondere bei der Anwendung von Ultraschalldurchflussmessgeräten zur Messung des Durchflusses von gasförmigen Medien ist der vom Ultraschallwandler in das gasförmige Medium übermittelte Anteil der Schwingungsenergie gegenüber der insgesamt erzeugten Schwingungsenergie sehr gering, so dass das Problem des Übersprechens hier besonders gravierend ist.

Im Stand der Technik sind verschiedene Maßnahmen bekannt, um das zuvor erläuterte Übersprechen, also das Entstehen von Gehäusewellen zu reduzieren.

Einige Maßnahmen befassen sich mit der Aufgabe, derartige Gehäusewellen schon in der Entstehung zu vermeiden. Dazu zählen beispielsweise bestimmte Ausgestaltungen des Ultraschallfensters des Wandlergehäuses hinsichtlich einer besonders guten Impedanzanpassung zur Maximierung des transmit-tierten Energieanteils oder hinsichtlich einer Auslegung des Ultraschallfensters als λ/4-Schicht zur Reduzierung von Reflexionen. Andere Maßnahmen befassen sich damit, bereits entstandene Gehäusewellen an einer Weiterleitung zu hindern, beispielsweise durch fehlangepaßte akustische Impedanzübergänge.

Aus der DE 10 2010 064 117 A1 ist ein Ultraschallwandler als Teil eines Ultraschalldurchflussmessgerätes bekannt, der zwei mechanische Resonatoren aufweist, die in unterschiedlicher Weise ausgebildet sind.

Die US 5,159,838 offenbart einen Ultraschallwandler als Teil eines Ultraschalldurchflussmessgerätes. Ein Messrohr ist über ein erstes Dämpfungssystem und ein zweites Dämpfungssystem mit einem Flansch verbunden. Hierbei ist das erste Dämpfungssystem als Vakuumtasche realisiert, das zweite Dämpfungssystem ist mit einem Dämpfungsmaterial gefüllt. Durch die Dämpfungssysteme werden die Schallwellen abgeschwächt.

Die WO 00/72000 A1 offenbart einen Ultraschallwandler mit einem Befestigungsabschnitt und mit einem Wandlerabschnitt. Ein mechanisches Koppelsystem ist zwischen dem Befestigungsabschnitt und dem Wandlerabschnitt des Ultraschallwandlers angeordnet.

Der eingangs beschriebene Ultraschallwandler, von dem die Erfindung ausgeht, gehört durch die deutsche Offenlegungsschrift 10 2008 033 098 und durch die inhaltsgleiche europäische Offenlegungsschrift 2 148 322 zum Stand der Technik. Bei diesem Ultraschallwandler ist eine weitere Maßnahme zur Verhinderung der Übertragung von Gehäusewellen auf das Wandlergehäuse des Ultraschallwandlers dadurch realisiert, dass im zweiten Bereich des Wandlergehäuses ein relativ weiches mechanisches Koppelsystem vorgesehen ist und das Koppelsystem wenigstens zwei schwach gekoppelte, in Ausbreitungsrichtung der Gehäusewellen im wesentlichen hintereinander wirksame mechanische Resonatoren aufweist.

Durch die mechanischen Resonatoren ist es zunächst möglich, die von den Ultraschallwellen transportierte Energie lokal zu "fangen", nämlich durch Anregung der mechanischen Resonatoren zu Schwingungen. Mechanische Resonatoren sind üblicherweise als Feder-Masse-Systeme beschreibbar, wobei bei realen Feder-Masse-Systemen die Eigenschaft der Feder - nämlich eine auslenkungsabhängige Kraftwirkung - nicht realisierbar ist, ohne einen - wenn auch sehr kleinen - Beitrag zur Masse des Resonators beizusteuern, genauso wie eine Masse aufgrund ihrer konstruktiven Einbringung in den Resonator auch immer die Federeigenschaft des Feder-Masse-Systems beeinflußt; Feder und Masse sind konstruktiv nicht vollkommen voneinander trennbar.

Durch die serielle Anordnung der zumindest zwei mechanischen Resonatoren in Ausbreitungsrichtung der Gehäusewellen wird erreicht, dass die Gehäusewellen alle Resonatoren durchqueren müssen, um von dem ersten Bereich des Wandlergehäuses zu dem dritten Bereich des Wandlergehäuses zu gelangen und umgekehrt. Durch die schwache Kopplung der beiden Resonatoren wird erreicht, dass die Resonatoren für die Gehäusewellen insgesamt ein größeres Hindernis darstellen, als dies bei stark gekoppelten Resonatoren der Fall ist, selbst wenn diese an sich ansonsten gleiche Schwingungseigenschaften haben. Bei einer starken mechanischen Kopplung überträgt sich die Schwingung eines Resonators praktisch unmittelbar auf den benachbarten Resonator, was bei einer schwachen mechanischen Kopplung nicht der Fall ist, wenngleich auch hier selbstverständlich eine mechanische Wechselwirkung zwischen den benachbarten Resonatoren gegeben ist.

Im Folgenden wird das zuvor beschriebene, aus wenigstens zwei schwach gekoppelten mechanischen Resonatoren bestehende Koppelsystem auch als "relativ weiches mechanisches Koppelsystem" bezeichnet, und in Bezug auf Realisierungsmöglichkeiten wird zur Vermeidung von Wiederholungen auf den Offenbarungsgehalt der deutschen Offenlegungsschrift 10 2008 033 098 bzw. der parallelen europäischen Offenlegungsschrift 2 148 322 verwiesen; der Offenbarungsgehalt dieser vorveröffentlichten Druckschriften wird hiermit ausdrücklich auch zum Offenbarungsgehalt in Verbindung mit der vorliegenden Erfindung gemacht.

Die der Erfindung zugrunde liegende Aufgabe besteht darin, den Ultraschallwandler, von dem die Erfindung ausgeht, in Bezug auf die Verhinderung der Übertragung von Gehäusewellen zu verbessern.

Nach einer ersten erfindungsgemäßen Lehre weist ein in Bezug auf die Verhinderung der Übertragung von Gehäusewellen verbesserter Ultraschallwandler ein zweites weiches mechanisches Koppelsystem auf, das im Wesentlichen entsprechend dem ersten Koppelsystem realisiert ist. Dazu wird auch an dieser Stelle nochmals auf den Offenbarungsgehalt der deutschen Offenlegungsschrift 10 2008 033 098 und der parallelen europäischen Offenlegungsschrift 2 148 322 verwiesen.

Ferner ist vorgesehen, dass das Wandlergehäuse einen Gehäuseflansch aufweist, dass von den beiden Koppelsystemen ein Koppelsystem auf der dem Ultraschallfenster nahen Seite des Gehäuseflansches und das andere Koppelsystem auf der dem Ultraschallfenster fernen Seite des Gehäuseflansches angeordnet ist, dass das auf der dem Ultraschallfenster nahen Seite des Gehäuseflansches vorgesehene Koppelsystem an seinem dem Ultraschallfenster nahen Ende mit dem Gehäuserohr und an seinem dem Ultraschllfenster fernen Ende mit dem Gehäuseflansch verbunden ist und dass das auf der dem Ultraschallfenster fernen Seite des Gehäuseflansches vorgesehene Koppelsystem an seinem dem Ultraschallfenster fernen Ende mit dem Gehäuserohr und an seinem dem Ultraschallfenster nahen Ende mit dem Gehäuseflansch verbunden ist, so dass die beiden Koppelsysteme anti-parallel wirksam sind.

Während bei dem ersten Koppelsystem und vorzugsweise auch bei dem zweiten Koppelsystem jeweils wenigstens zwei schwach gekoppelte, in Ausbreitungsrichtung der Gehäusewellen im wesentlichen hintereinander wirksame mechanische Resonatoren vorgesehen sind, die Resonatoren also seriell wirken, geht die Lehre dahin, dann, wenn ein zweites Koppelsystem vorgesehen ist, die Ausbildung und Anordnung der beiden Koppelsysteme so zu realisieren, dass sie anti-parallel wirksam sind.

Bei dem Ultraschallwandler, von dem die Erfindung ausgeht, ist das Wandlerelement am unteren Ende des Wandlergehäuses vorgesehen, das heißt an dem Ende, das dem strömenden Medium zugewandt ist oder auch in das strömende Medium hineinragt. Das mechanische Koppelsystem ist mehr oder weniger am oberen Ende des Wandlergehäuses realisiert, in gewisser Weise auch Teil des Wandlergehäuses. Der Bereich des Wandlergehäuses, in dem das Wandlerelement vorgesehen ist, ist weiter oben als erster Bereich des Wandlergehäuses bezeichnet worden, der obere Bereich als dritter Bereich und der zwischen dem ersten Bereich und dem dritten Bereich liegende Bereich als zweiter Bereich, nämlich als vermittelnder zweiter Bereich des Wandlergehäuses, über den sich die Gehäusewellen in Richtung des dritten Bereiches des Wandlergehäuses ausbreiten. Man kann den bekannten Ultraschallwandler, von dem die Erfindung ausgeht, auch dahin beschreiben, dass er dreiteilig ausgebildet ist, nämlich einen unteren ersten, das Wandlerelement aufnehmenden Bereich, einen vermittelnden zweiten Bereich und einen oberen dritten Bereich, zu dem das Koppelsystem gehört, aufweist. Beispielsweise sind der untere erste Bereich, der vermittelnde zweite Bereich und der obere dritte Bereich jeweils durch Schweißen miteinander verbunden. Der vermittelnde zweite Bereich kann ein Gehäuserohr sein, das obere Ende des Wandlergehäuses kann als Gehäuseflansch ausgebildet sein. Der untere erste Bereich des Wandlergehäuses, der vermittelnde zweite, als Gehäuserohr ausgeführte Bereich des Wandlergehäuses, das Koppelsystem und der Gehäuseflansch sind seriell angeordnet.

Unter Berücksichtigung dessen, was zuvor in Bezug auf den bekannten Ultraschallwandler, von dem die Erfindung ausgeht, ausgeführt ist, wird in besonderer Weise nachvollziehbar die Lehre der Erfindung, der besondere Bedeutung zukommt. Danach ist der erfindungsgemäße Ultraschallwandler dadurch gekennzeichnet, dass von den beiden Koppelsystemen ein Koppelsystem auf der dem Wandlerelement nahen Seite des Gehäuseflansches und das andere Koppelsystem auf der dem Wandlerelement fernen Seite des Gehäuseflansches angeordnet ist. Das ist so realisiert, dass das auf der dem Wandlerelement nahen Seite des Gehäuseflansches vorgesehene Koppelsystem an seinem dem Wandlerelement nahen Ende mit dem Gehäuserohr und an seinem dem Wandlerelement fernen Ende mit dem Gehäuseflansch verbunden ist, und dass das auf der dem Wandlerelement fernen Seite des Gehäuseflansches vorgesehene Koppelsystem an seinem dem Wandlerelement fernen Ende mit dem Gehäuserohr und an seinem dem Wandlerelement nahen Ende mit dem Gehäuseflansch verbunden ist. Bei der Ausgestaltung des erfindungsgemäßen Ultraschallwandlers sind also die beiden Koppelsysteme anti-parallel wirksam.

Vom Wandlerelement ausgehende Gehäusewellen im dem Wandlerelement nahen Koppelsystem einerseits und im dem Wandlerelement fernen Koppelsystem andererseits haben in Bezug auf den Gehäuseflansch eine sich teilweise, vorzugsweise vollständig kompensierende Wir-kung.

Zuvor ist beschrieben, wie vorzugsweise die Koppelsysteme mit dem Gehäuserohr und dem Gehäuseflansch verbunden sind. Dieses Verbundensein kann selbstverständlich unterschiedlich realisiert sein. Vorzugsweise sind das dem Wandlerelement nahe Ende des dem Wandlererlement nahen Koppelsystems und das dem Wandlerelement ferne Ende des dem Wandlerelement fernen Koppelsystems mit dem Gehäuserohr verschweißt. Dabei, aber nicht ausschließlich dabei, empfiehlt sich eine Ausführungsform, bei der das dem Wandlerelement ferne Ende des dem Wandlerelement nahen Koppelsystems und das dem Wandlerelement nahe Ende des dem Wandlerelement fernen Koppelsystems mit dem Gehäuseflansch einstückig ausgeführt sind.

Bei dem bekannten Ultraschallwandler, von dem die Erfindung ausgeht, und bei dem bisher beschriebenen erfindungsgemäßen Ultraschallwandler befindet sich das Wandlerelement an dem bzw. in dem dem Medium zugewandten Ende des Wandlergehäuses.

Häufig sind bei Ultraschallwandlern die Wandlerelemente Piezoelemente, die nicht oberhalb einer bestimmten Temperatur, der Curie-Temperatur eingesetzt werden können. Dies berücksichtigend gibt es im Stand der Technik auch Ultraschallwandler, bei denen die Wandlerelemente am dem Medium fernen Ende vorgesehen sind, und der erzeugte Ultraschall über einen Schalltrichter und einen Trichtermantel dem Ultraschallfenster zugeführt wird (vgl. dazu die deutsche Patentschrift 198 12 458 und die inhaltsgleiche europäische Patentschrift 1 046 886). Insbesondere bei solchen Ultraschallwandlern, aber nicht nur bei solchen Ultraschallwandlern, empfiehlt es sich im Übrigen, das Koppelsystem bzw. die Koppelsysteme mit einer außen umlaufenden Nut bzw. mit außen umlaufenden Nuten zu versehen, also gleichsam zwischen einem mechanischen Resonator und dem anderen mechanischen Resonator ein elastisches Scharnier zu realisieren. Dabei empfiehlt es sich, die Nuten im Nutengrund kreisbogenförmig auszuführen oder mit kreisbogenförmigen Übergängen zu den Nutenflanken zu versehen, wodurch partielle mechanische Überbeanspruchungen vermieden werden können.

Nach einer weiteren erfindungsgemäßen Lehre, die Bedeutung hat mit dem, was zuvor beschrieben worden ist, ist ein erfindungsgemäßer Ultraschallwandler dadurch gekennzeichnet, dass innerhalb des Wandlergehäuses Dämpfungsmaterial vorgesehen ist, insbesondere Bronze-Granulat oder Bronze-Pulver. Damit dieses Dämpfungsmaterial nicht in das Ultraschallfenster, das natürlich frei bleiben muss, eindringen kann, ist weiter vorgesehen, dass das Wandlergehäuse an seinem dem Ultraschallfenster nahen Ende eine ein Eindringen des Dämpfungsmaterials in das Ultraschallfenster verhindernde Trennscheibe aufweist.

Handelt es sich bei dem Ultraschallwandler um einen solchen, wie er aus der deutschen Patentschrift 198 12 458 und der inhaltsgleichen europäischen Patentschrift 1 046 886 bekannt ist, bei dem also das Wandlerelement an dem dem Ultraschallfenster des Wandlergehäuses fernen Ende und zwischen dem Wandlerelement und dem Ultraschallfenster ein Ultraschallwellenleiter vorgesehen ist, empfiehlt es sich, ein dem Ultraschallwellenleiter umgebendes Schutzrohr vorzusehen. Das innerhalb des Wandlergehäuses vorgesehene Dämpfungsmaterial soll ja nur Gehäusewellen dämpfen, selbstverständlich nicht die Übertragungseigenschaften des Ultraschallwellenleiters negativ beeinflussen.

Das bei der zuletzt beschriebenen Ausführungsform eines erfindungsgemäßen Ultraschallwandlers innerhalb des Wandlergehäuses vorgesehene Dämpfungsmaterial wirkt nur dann bzw. nur dann besonders gut, wenn es sich innerhalb des Wandlergehäuses unter einem bestimmten Druck befindet. Folglich empfiehlt es sich, an dem dem Ultraschallfenster fernen Ende des Wandlergehäuses eine auf das Dämpfungsmaterial einwirkende Druckerzeugungseinrichtung vorzusehen. Diese Druckerzeugungseinrichtung weist vorzugsweise eine an einer Seite am Wandlergehäuse abgestützte und auf der anderen Seite auf das Dämpfungsmaterial wirkende Feder auf, insbesondere ein Tellerfederpaket.

Im Einzelnen gibt es nun verschiedene Möglichkeiten, den erfindungsgemä-ßen Ultraschallwandler auszugestalten und weiterzubilden. Dazu wird verwiesen auf die den Patentansprüchen 1 und 10 nachgeordneten Patentansprüche und auf die nachfolgend in Verbindung mit den Figuren beschriebenen und in den Figuren dargestellten Ausführungsbeispiele. In den Figuren zeigen
- Fig. 1: ein erstes Ausführungsbeispiel eines Ultraschallwandlers,
- Fig. 2: ein zweites Ausführungsbeispiel eines Ultraschallwandlers und
- Fig. 3: ein drittes Ausführungsbeispiel eines Ultraschallwandlers.

Die in den Figuren dargestellten Ultraschallwandler sind jeweils wesentlicher Teil eines im übrigen nicht dargestellten Ultraschalldurchflussmessgeräts und weisen zunächst ein Wandlergehäuse 1 und ein Wandlerelement 2 auf, bei dem es sich vorzugsweise um ein Piezoelement handelt. Das Wandlerelement 2 ist zum Senden oder Empfangen von Ultraschallwellen ausgebildet.

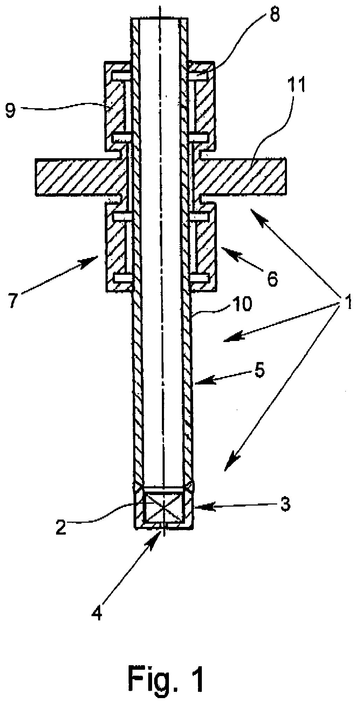

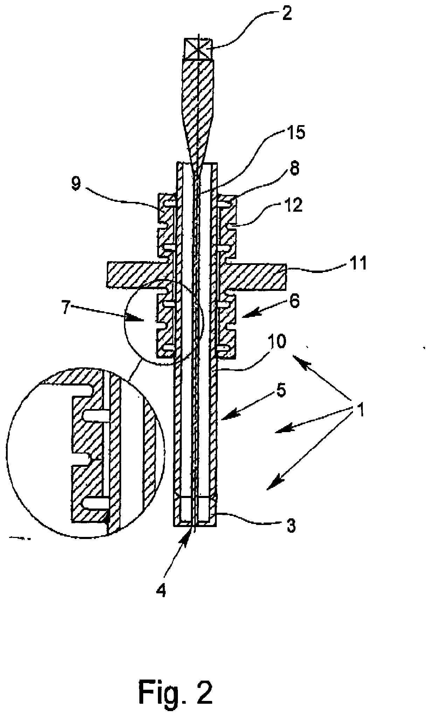

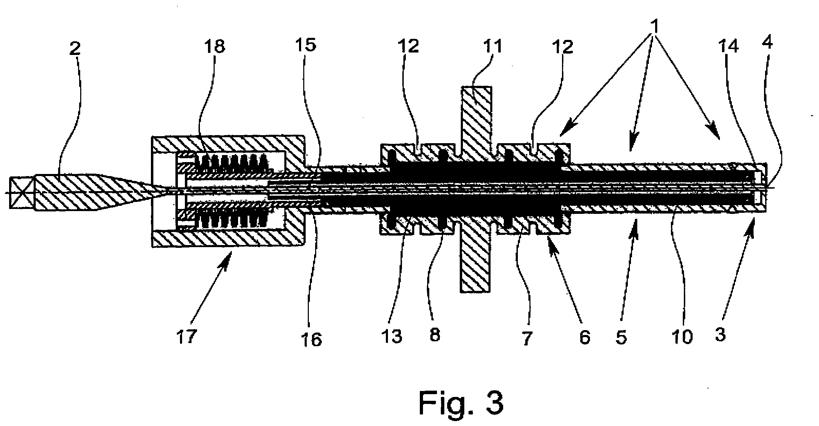

Wie die Fig. 1 bis 3 zeigen, weist das Wandlergehäuse 1 in einem ersten Bereich 3 ein Ultraschallfenster 4 auf. Im Ausführungsbeispiel nach Fig. 1 ist das Wandlerelement 2 nahe dem Ultraschallfenster 4 des Wandlergehäuses 1 vorgesehen. Im Gegensatz dazu befindet sich bei den Ausführungsbeispielen nach den Fig. 2 und 3 das Wandlerelement 2 außerhalb des Wandlergehäuses 1.

Ungewollt, aber nicht zu vermeiden, werden Ultraschallwellen als Gehäusewellen zwischen dem ersten Bereich 3 des Wandlergehäuses 1 über einen vermittelnden zweiten Bereich 5 des Wandlergehäuses 1 in einen dem ersten Bereich 3 des Wandlergehäuses 1 gegenüberliegenden dritten Bereich 6 des Wandlergehäuses 1 übertragen. Im zweiten Bereich 5 des Wandlergehäuses 1 ist ein relativ weiches mechanisches Koppelsystem 7 vorgesehen, das zwei schwach gekoppelte mechanische Resonatoren 8 aufweist.

Das, was bei den Ultraschallwandlern, soweit sie bisher beschrieben sind, erreicht ist, insbesondere durch die beiden schwach gekoppelten mechanischen Resonatoren 8, ist weiter oben bereits im Einzelnen erläutert. Im übrigen wird insoweit auch auf die deutsche Offenlegungsschrift 10 2008 033 098 und die inhaltsgleiche europäische Offenlegungsschrift 2 148 322 verwiesen, aus denen Ultraschallwandler mit den Merkmalen bekannt sind, die bisher erläutert worden sind. Folglich wird auch hier nochmals der Offenbarungsgehalt der zuletzt genannten vorveröffentlichten Druckschriften zum Offenbarungsgehalt in Bezug auf die erfindungsgemäßen Ultraschallwandler gemacht.

Gegenüber den im Stand der Technik bekannten Ultraschallwandlern sind die erfindungsgemäßen Ultraschallwandler in Bezug auf die Verhinderung der Übertragung von Gehäusewellen nochmals verbessert.

Wie die Figuren zeigen, ist - zusätzlich zu dem Koppelsystem 7 - ein zweites weiches mechanisches Koppelsystem 9 vorgesehen. Dieses zweite Koppelsystem 9 ist im Wesentlichen entsprechend dem ersten Koppelsystem 7 realisiert. Bei beiden Koppelsystemen 7 und 9 sind die mechanischen Resonatoren 8 in Ausbreitungsrichtung der Gehäusewellen im Wesentlichen hintereinander wirksam, die Resonatoren wirken also seriell.

Bei dem Ultraschallwandler, von dem die Erfindung ausgeht und bei dem Ultraschallwandler, wie er in der Fig. 1 dargestellt ist, ist das Wandlerelement 2 am unteren Endes des Wandlergehäuses 1 vorgesehen, das heißt an dem Ende, das dem strömenden Medium zugewandt ist oder auch in das strömende Medium hineinragt. Das erste mechanische Koppelsystem 7 ist am oberen Ende des Wandlergehäuses 1 realisiert, gleichsam Teil des Wandlergehäuses 1. Man kann den bekannten Ultraschallwandler und den erfindungsgemäßen Ultraschallwandler insoweit, als er bisher beschrieben ist, auch dahingehend beschreiben, dass er dreiteilig ausgebildet ist, und zwar einen unteren ersten, das Wandlerelement 2 aufnehmenden Bereich 3, einen vermittelnden zweiten Bereich 5 und einen oberen dritten Bereich 6, zu dem das erste Koppelsystem 7 gehört, aufweist. Der vermittelnde zweite Bereich 5 kann konkret ein Gehäuserohr 10 sein, das obere Ende des Wandlergehäuses 1 kann als Gehäuseflansch 11 ausgebildet sein. Der untere erste Bereich 3 des Wandlergehäuses 1, der vermittelnden zweite, als Gehäuserohr 10 ausgeführte Bereich 5 des Wandlergehäuses 1, das erste Koppelsystem 7 und der Gehäuseflansch 11 sind also seriell angeordnet.

Bei allen in den Figuren dargestellten Ausführungsbeispielen sind die Ultraschallwandler dadurch gekennzeichnet, dass von den beiden Koppelsystemen 7, 9 das erste Koppelsystem 7 auf der dem Wandlerelement 2 nahen Seite des Gehäuseflansches 11 und das zweite Koppelsystem 9 auf der dem Wandlerelement 2 fernen Seite des Gehäuseflansches 11 angeordnet ist. Das ist in den dargestellten Ausführungsbeispielen im Einzelnen so realisiert, dass das auf der dem Wandlerelement 2 nahen Seite des Gehäuseflansches 11 vorgesehene erste Koppelsystem 7 an seinem dem Wandlerelement 2 nahen Ende mit dem Gehäuserohr 2 und an seinem dem Wandlerelement 2 fernen Ende mit dem Gehäuseflansch 11 verbunden ist, und dass das auf der dem Wandlerelement 2 fernen Seite des Gehäuseflansches 11 vorgesehene zweite Koppelsystem an seinem dem Wandlerelement 2 fernen Ende mit dem Gehäuserohr 10 und an seinem dem Wandlerelement 2 nahen Ende mit dem Gehäuseflansch 11 verbunden ist. Es sind also die beiden Koppelsysteme 7, 9 anti-parallel wirksam. Vom Wandlerelement 2 ausgehende Gehäusewellen, einerseits in dem Wandlerelement 2 nahen ersten Koppelsystem 7, andererseits in dem Wandlerelement 2 fernen zweiten Koppelsystem 9, haben in Bezug auf den Gehäuseflansch 11 des Wandlergehäuses eine sich teilweise, vorzugsweise vollständig kompensierende Wirkung.

Das zuvor beschriebene Verbundensein der Koppelsysteme 7, 9 mit dem Gehäuserohr 10 und dem Gehäuseflansch 11 kann unterschiedlich realisiert sein. In den dargestellten Ausführungsbeispielen sind das dem Wandlerelement 2 nahe Ende des dem Wandlerelement 2 nahen ersten Koppelsystems 7 und das dem Wandlerelement 2 ferne Ende des dem Wandlerelements 2 fernen zweiten Koppelsystems 9 mit dem Gehäuserohr 10 verschweißt. Dabei ist das dem Wandlerelement 2 ferne Ende des dem Wandlerelement 2 nahen ersten Koppelsystems 7 und das dem Wandlerelement 2 nahe Ende des dem Wandlerelement 2 fernen zweiten Koppelsystems 9 mit dem Gehäuseflansch 11 einstückig ausgeführt.

Bei dem in Fig. 1 dargestellten Ultraschallwandler befindet sich das Wandlerelement 2 an dem dem Medium, dessen Durchflussrate bestimmt werden soll, zugewandten Ende des Wandlergehäuses 1.

Wie bereits ausgeführt, sind bei Ultraschallwandlern die Wandlerelemente häufig Piezoelemente, die nicht oberhalb einer bestimmten Temperatur, der Curie-Temperatur eingesetzt werden können. Folglich gibt es im Stand der Technik auch Ultraschallwandler, bei denen die Wandlerelemente an dem Medium fernen Ende vorgesehen sind (vgl. dazu die deutsche Patentschrift 198 12 458 und die inhaltsgleiche europäische Patentschrift 1 046 886). Die Fig. 2 und 3 zeigen Ausführungsbeispiele von Ultraschallwandlern, bei denen die Wandlerelemente 2 an dem Medium, dessen Durchflussrate zu messen ist, fernen Ende vorgesehen sind.

Im Übrigen zeigen die Fig. 2 und 3 insoweit bevorzugte Ausführungsformen von Ultraschallwandlern, als die Koppelsysteme 7 und 9 jeweils mit einer außen umlaufenden Nut 12 versehen sind, also gleichsam zwischen einem mechanischen Resonator 8 und dem anderen mechanischen Resonator 8 ein elastisches Scharnier realisiert ist. Dabei sind die Nuten 12 im Nutengrund kreisbogenförmig ausgeführt oder mit kreisbogenförmigen Übergängen zu den Nutenflanken versehen, wodurch mechanische Überbeanspruchungen vermieden werden.

Die Fig. 3 zeigt ein besonders bevorzugtes Ausführungsbeispiel eines Ultraschallwandlers. Bei diesem Ultraschallwandler ist, wie das aus der deutschen Patentschrift 198 12 458 und der inhaltsgleichen europäischen Patentschrift 1 046 886 bekannt ist, das Wandlerelement 2 an dem dem Ultraschallfenster 4 des Wandlergehäuses 1 fernen Ende vorgesehen. Zwischen dem Wandlerelement 2 und dem Ultraschallfenster 4 ist ein Ultraschallwellenleiter 15 vorgesehen, der von einem Schutzrohr 16 umgeben ist. Das innerhalb des Wandlergehäuses 1 vorgesehene Dämpfungsmaterial 13 soll nur Gehäusewellen dämpfen, selbstverständlich nicht die Übertragungseigenschaften des Ultraschallwellenleiters negativ beeinflussen.

Das bei dem im Ausführungsbeispiel nach Fig. 3 innerhalb des Wandlergehäuses vorgesehene Dämpfungsmaterial 13, vorzugsweise Bronze-Granulat oder Bronze-Pulver, wirkt dann bzw. nur dann besonders gut, wenn es sich innerhalb des Wandlergehäuses 1 unter einem bestimmten Druck befindet. Um einen solchen Druck zu erreichen, ist im Ausführungsbeispiel nach Fig. 3 an dem dem Ultraschallfenster 4 fernen Endes des Wandlergehäuses 1 eine auf das Dämpfungsmaterial 13 einwirkende Druckerzeugungseinrichtung 17 vorgesehen, die im Ausführungsbeispiel an einer Seite am Wandlergehäuse 1 abgestützt und auf der anderen Seite eine auf das Dämpfungsmaterial 13 wirkende Feder 18 aufweist, im dargestellten Ausführungsbeispiel ein Tellerfederpaket.

## Patentansprüche

1. Ultraschallwandler als ein Teil eines Ultraschalldurchflussmessgeräts, mit einem Wandlergehäuse (1) und einem Wandlerelement (2), wobei das Wandlergehäuse (1) ein Ultraschallfenster (4) und ein Gehäuserohr (10) aufweist, das Wandlerelement (2) zum Senden oder Empfangen von Ultraschallwellen ausgebildet und entweder nahe dem Ultraschallfenster (4) des Wandlergehäuses (2) oder fern vom Ultraschallfenster (4) des Wandlergehäuses (1) vorgesehen ist, wobei ein relativ weiches mechanisches Koppelsystem (7) vorgesehen ist, das wenigstens einen schwach gekoppelten mechanischen Resonator (8) oder wenigstens zwei schwach gekoppelte Resonatoren (8) aufweist, und wobei ein zweites weiches mechanisches Koppelsystem (9) vorgesehen ist,
**dadurch gekennzeichnet,**
**dass** das zweite Koppelsystem (9) entsprechend dem ersten Koppelsystem (7) realisiert ist,
**dass** das Wandlergehäuse (1) einen Gehäuseflansch (11) aufweist, dass von den beiden Koppelsystemen (7, 9) ein Koppelsystem (7) auf der dem Ultraschallfenster (4) nahen Seite des Gehäuseflansches (11) und das andere Koppelsystem (9) auf der dem Ultraschallfenster (4) fernen Seite des Gehäuseflansches (11) angeordnet ist,
**dass** das auf der dem Ultraschallfenster (4) nahen Seite des Gehäuseflansches (11) vorgesehene Koppelsystem (7) an seinem dem Ultraschallfenster (4) nahen Ende mit dem Gehäuserohr (10) und an seinem dem Ultraschallfenster (4) fernen Ende mit dem Gehäuseflansch (11) verbunden ist und dass das auf der dem Ultraschallfenster (4) fernen Seite des Gehäuseflansches (10) vorgesehene Koppelsystem (9) an seinem dem Ultraschallfenster (4) fernen Ende mit dem Gehäuserohr (10) und an seinem dem Ultraschallfenster (4) nahen Ende mit dem Gehäuseflansch (11) verbunden ist,
so dass die beiden Koppelsysteme (7, 9) anti-parallel wirksam sind.

2. Ultraschallwandler nach Anspruch 1, **dadurch gekennzeichnet, dass** das dem Ultraschallfenster (4) nahe Ende des dem Ultraschallfenster (4) nahen Koppelsystems (7) und das dem Ultraschallfenster (4) ferne Ende des dem Ultraschallfenster (4) fernen Koppelsystems (9) mit dem Gehäuserohr (10) verschweißt sind.

3. Ultraschallwandler nach Anspruch 1 oder 2, **dadurch gekennzeichnet, dass** das dem Ultraschallfenster (4) ferne Ende des dem Ultraschallfenster (4) nahen Koppelsystems (7) und das dem Ultraschallfenster (4) nahe Ende des dem Ultraschallfenster (4) ferne Koppelsystem (9) mit dem Gehäuseflansch (11) einstückig ausgeführt sind.

4. Ultraschallwandler nach einem der Patentansprüche 1 bis 3, wobei das mechanische Koppelsystem (7) bzw. die Koppelsysteme (7, 9) wenigstens zwei schwach gekoppelte mechanische Resonatoren (8) aufweisen, **dadurch gekennzeichnet, dass** das Koppelsystem (7) bzw. die Koppelsysteme (7, 9) mit einer außen umlaufenden Nut (12) versehen ist bzw. sind, also gleichsam zwischen einem mechanischen Resonator (8) und dem anderen mechanischen Resonator (8) ein elastisches Scharnier realisiert ist.

5. Ultraschallwandler nach Anspruch 4, **dadurch gekennzeichnet, dass** die Nuten (12) im Nutengrund kreisbogenförmig ausgeführt sind oder kreisbogenförmige Übergänge zu den Nutenflanken haben.

6. Ultraschallwandler nach einem der Ansprüche 1 bis 5, wobei das Wandlergehäuse (1) in einem ersten Bereich (3) das Ultraschallfenster (4) aufweist, wobei Ultraschallwellen als Gehäusewellen zwischen dem ersten Bereich (3) des Wandlergehäuses (1) über einen vermittelnden zweiten Bereich (5) des Wandlergehäuses (1) in einen dem ersten Bereich (3) des Wandlergehäuses (1) gegenüberliegenden dritten Bereich (6) des Wandlergehäuses übertragbar sind, wobei im zweiten Bereich (5) des Wandlergehäuses (1) ein relativ weiches mechanisches Koppelsystem (7) vorgesehen ist und wobei das Koppelsystem (7) wenigstens zwei schwach gekoppelte mechanische Resonatoren (8) aufweist,
**dadurch gekennzeichnet,**
**dass** innerhalb des Wandlergehäuses (1) Dämpfungsmaterial (13) vorgesehen ist, insbesondere Bronze-Granulat oder Bronze-Pulver.

7. Ultraschallwandler nach Anspruch 6, **dadurch gekennzeichnet, dass** das Wandlergehäuse (1) an seinem dem Ultraschallfenster (4) nahen Ende eine ein Eindringen des Dämpfungsmaterials (13) in das Ultraschallfenster (4) verhindernde Trennscheibe (14) aufweist.

8. Ultraschallwandler nach Anspruch 6 oder 7, wobei das Wandlerelement (2) an dem dem Ultraschallfenster (4) des Wandlergehäuses (1) fernen Ende vorgesehen ist und zwischen dem Wandlerelement (2) und dem Ultraschallfenster (4) ein Ultraschallwellenleiter (15) vorgesehen ist, **dadurch gekennzeichnet, dass** ein den Ultraschallwellenleiter (15) umgebendes Schutzrohr (16) vorgesehen ist.

9. Ultraschallwandler nach einem der Ansprüche 6 bis 8, **dadurch gekennzeichnet, dass** an dem dem Ultraschallfenster (4) fernen Ende des Wandlergehäuses (1) eine auf das Dämpfungsmaterial (13) einwirkende Druckerzeugungseinrichtung (17) vorgesehen ist.

10. Ultraschallwandler nach Anspruch 9, **dadurch gekennzeichnet, dass** die Druckerzeugungseinrichtung (17) an einer Seite am Wandlergehäuse (1) abgestützt ist und auf der anderen Seite eine auf das Dämpfungsmaterial (13) wirkende Feder (18) aufweist, insbesondere ein Tellerfederpaket.

## Claims

1. Ultrasonic transducer as a part of an ultrasonic flowmeter, comprising a transducer housing (1) and a transducer element (2), wherein the transducer housing (1) has an ultrasound window (4) and a housing tube (10), the transducer element (2) is designed to transmit or receive ultrasound waves and is provided either close to the ultrasound window (4) of the transducer housing (2) or remote from the ultrasound window (4) of the transducer housing (1), wherein a relatively soft mechanical coupling system (7) is provided and wherein a second soft mechanical coupling system (9) is provided,
**characterized in**
**that** the second coupling system (9) is implemented corresponding to the first coupling system (7),
**that** the transducer housing (1) has a housing flange (11), that one coupling system (7) of the two coupling systems (7, 9) is arranged on the side of the housing flange (11) close to the ultrasound window (4) and the other coupling system (9) is arranged on the side of the housing flange (11) remote from the ultrasound window (4),
**that** the coupling system (7) provided on the side of the housing flange (11) close to the ultrasound window (4) is connected at its end close to the ultrasound window (4) to the housing tube (10) and at its end remote from the ultrasound window (4) to the housing flange (11) and that the coupling system (9) provided on the side of the housing flange (10) remote from the ultrasound window (4) is connected at its end remote from the ultrasound window (4) to the housing tube (10) and at its end close to the ultrasound window (4) to the housing flange (11),
so that the two coupling systems (7, 9) act antiparallel.

2. Ultrasonic transducer according to claim 1, **characterized in that** the end of the coupling system (7) close to the ultrasonic window (4) and the end of the coupling system (9) remote from the ultrasonic window (4) are welded to the housing tube (10).

3. Ultrasonic transducer according to claim 1 or 2, **characterized in that** the end of the coupling system (7) remote from the ultrasonic window (4) and close to the ultrasonic window (4) and the end of the coupling system (9) remote from the ultrasound window (4) are carried out in one piece with the housing flange (11).

4. Ultrasonic transducer according to any one of claims 1 to 3, wherein the mechanical coupling system (7) or the coupling systems (7, 9) have at least two weakly coupled mechanical resonators (8), **characterized in that** the coupling system (7) or the coupling systems (7, 9) is or are provided with an externally circumferential groove (12), i.e. an elastic hinge is implemented, as it were, between one mechanical resonator (8) and the other mechanical resonator (8).

5. Ultrasonic transducer according to claim 4, **characterized in that** the grooves (12) in the groove base are designed in the shape of a circular arc or have circular arc-shaped transitions to the groove flanks.

6. Ultrasonic transducer according to any one of claims 1 to 5, wherein the transducer housing (1) has the ultrasonic window (4) in a first region (3), wherein ultrasonic waves can be transmitted as housing waves between the first region (3) of the transducer housing (1) via an intermediary second region (5) of the transducer housing (1) into a third region (6) of the transducer housing opposite the first region (3) of the transducer housing (1), wherein a relatively soft mechanical coupling system (7) is provided in the second region (5) of the transducer housing (1) and wherein the coupling system (7) comprises at least two weakly coupled mechanical resonators (8),
**characterized in**
**that** damping material (13) is provided inside the transducer housing (1), in particular bronze granulate or bronze powder.

7. Ultrasonic transducer according to claim 6, **characterized in that** the transducer housing (1) has a separating disc (14) at its end close to the ultrasound window (4) which prevents penetration of the damping material (13) into the ultrasound window (4).

8. Ultrasonic transducer according to claim 6 or 7, wherein the transducer element (2) is provided at the end remote from the ultrasonic window (4) of the transducer housing (1) and an ultrasonic waveguide (15) is provided between the transducer element (2) and the ultrasonic window (4), **characterized in that** a protective tube (16) surrounding the ultrasonic waveguide (15) is provided.

9. Ultrasonic transducer according to any one of claims 6 to 8, **characterized in that** a pressure-generating device (17) acting on the damping material (13) is provided at the end of the transducer housing (1) remote from the ultrasound window (4).

10. Ultrasonic transducer according to claim 9, **characterized in that** the pressure-generating device (17) is supported on one side on the transducer housing (1) and has a tongue (18) acting on the damping material (13) on the other side, in particular a disc spring assembly.

## Revendications

1. Transducteur d'ultrasons en tant que partie d'un débitmètre à ultrasons, comportant un boîtier de transducteur (1) et un élément transducteur (2), dans lequel le boîtier de transducteur (1) présente une fenêtre à ultrasons (4) et un tube de boîtier (10), l'élément transducteur (2) est réalisé pour l'émission ou la réception d'ondes ultrasonores et est prévu soit près de la fenêtre à ultrasons (4) du boîtier de transducteur (2) soit loin de la fenêtre à ultrasons (4) du boîtier de transducteur (1), dans lequel un système d'accouplement mécanique (7) relativement mou est prévu, lequel présente au moins un résonateur mécanique (8) accouplé faiblement ou au moins deux résonateurs (8) accouplés faiblement, et dans lequel un deuxième système d'accouplement mécanique (9) mou est prévu,
**caractérisé en ce que**
le deuxième système d'accouplement (9) est réalisé de manière à correspondre au premier système d'accouplement (7),
**en ce que** le boîtier de transducteur (1) présente une bride de boîtier (11), **en ce que**, parmi les deux systèmes d'accouplement (7, 9), un système d'accouplement (7) est disposé sur le côté de la bride de boîtier (11) proche de la fenêtre à ultrasons (4) et l'autre système d'accouplement (9) est disposé sur le côté de la bride de boîtier (11) éloigné de la fenêtre à ultrasons (4), **en ce que** le système d'accouplement (7) prévu sur le côté de la bride de boîtier (11) proche de la fenêtre à ultrasons (4) est relié au tube de boîtier (10) à son extrémité proche de la fenêtre à ultrasons (4) et est relié à la bride de boîtier (11) à son extrémité éloignée de la fenêtre à ultrasons (4) et **en ce que** le système d'accouplement (9) prévu sur le côté de la bride de boîtier (10) éloigné de la fenêtre à ultrasons (4) est relié au tube de boîtier (10) à son extrémité éloignée de la fenêtre à ultrasons (4) et est relié à la bride de boîtier (11) à son extrémité proche de la fenêtre à ultrasons (4),
de sorte que les deux systèmes d'accouplement (7, 9) soient actifs de manière anti-parallèle.

2. Transducteur d'ultrasons selon la revendication 1, **caractérisé en ce que** l'extrémité, proche de la fenêtre à ultrasons (4), du système d'accouplement (7) proche de la fenêtre à ultrasons (4) et l'extrémité, éloignée de la fenêtre ultrasons (4), du système d'accouplement (9) éloigné de la fenêtre ultrasons (4) sont soudées sur le tube de boîtier (10).

3. Transducteur d'ultrasons selon la revendication 1 ou 2, **caractérisé en ce que** l'extrémité, éloignée de la fenêtre à ultrasons (4), du système d'accouplement (7) proche de la fenêtre à ultrasons (4) et l'extrémité, proche de la fenêtre ultrasons (4), du système d'accouplement (9) éloigné de la fenêtre ultrasons (4) sont réalisées d'une seule pièce avec la bride de boîtier (11).

4. Transducteur d'ultrasons selon l'une des revendications 1 à 3, dans lequel le système d'accouplement mécanique (7) ou les systèmes d'accouplement (7, 9) présente(nt) au moins deux résonateurs mécaniques (8) accouplés faiblement, **caractérisé en ce que** le système d'accouplement (7) ou les systèmes d'accouplement (7, 9) est ou sont pourvu(s) d'une rainure périphérique extérieurement (12), par conséquent une charnière élastique est pour ainsi dire réalisée entre un résonateur mécanique (8) et l'autre résonateur mécanique (8).

5. Transducteur d'ultrasons selon la revendication 4, **caractérisé en ce que** les rainures (12) sont réalisées en forme d'arc de cercle dans le fond de rainure ou ont des transitions en forme d'arc de cercle par rapport aux flancs de rainure.

6. Transducteur d'ultrasons selon l'une des revendications 1 à 5, dans lequel le boîtier de transducteur (1) présente la fenêtre à ultrasons (4) dans une première région (3), dans lequel des ondes ultrasonores peuvent être transmises en tant qu'ondes de boîtier entre la première région (3) du boîtier de transducteur (1) par le biais d'une deuxième région de transmission (5) du boîtier de transducteur (1) dans une troisième région (6) du boîtier de transducteur opposée à la première région (3) du boîtier de transducteur (1), dans lequel un système d'accouplement mécanique (7) relativement mou est prévu dans la deuxième région (5) du boîtier de transducteur (1) et dans lequel le système d'accouplement (7) présente au moins deux résonateurs mécaniques (8) accouplés faiblement,
**caractérisé en ce**
**qu'**une matière d'amortissement (13) est prévue à l'intérieur du boîtier de transducteur (1), en particulier un granulat de bronze ou une poudre de bronze.

7. Transducteur d'ultrasons selon la revendication 6, **caractérisé en ce que** le boîtier de transducteur (1) présente, à son extrémité proche de la fenêtre ultrasons (4), une plaque de séparation (14) empêchant une pénétration de la matière d'amortissement (13) dans la fenêtre à ultrasons (4).

8. Transducteur d'ultrasons selon la revendication 6 ou 7, dans lequel l'élément transducteur (2) est prévu à l'extrémité éloignée de la fenêtre ultrasons (4) du boîtier de transducteur (1) et un guide d'ondes ultrasonores (15) est prévu entre l'élément transducteur (2) et la fenêtre à ultrasons (4), **caractérisé en ce qu'**un tube de protection (16) entourant le guide d'ondes ultrasonores (15) est prévu.

9. Transducteur d'ultrasons selon l'une des revendications 6 à 8, **caractérisé en ce qu'**un dispositif de génération de pression (17) agissant sur la matière d'amortissement (13) est prévu à l'extrémité du boîtier de transducteur (1) éloignée de la fenêtre à ultrasons (4).

10. Transducteur d'ultrasons selon la revendication 9, **caractérisé en ce que** le dispositif de génération de pression (17) est supporté sur le boîtier de transducteur (1) d'un côté et présente, de l'autre côté, un ressort (18) agissant sur la matière d'amortissement (13), en particulier un ensemble de rondelles-ressorts.
